# EUROPÄISCHE PATENTSCHRIFT

(11) **EP 1 879 774 B1**
(45) Veröffentlichungstag und Bekanntmachung des Hinweises auf die Patenterteilung: **14.11.2012**
(21) Anmeldenummer: 06742556.1
(22) Anmeldetag: 10.04.2006
(51) Int. Cl.: B60R 25/00, G07C 9/00

(54) **KRAFTFAHRZEUGSCHLIESSSYSTEM UND VERFAHREN ZUM ERLANGEN DES ZUGANGS ZU EINEM KRAFTFAHRZEUG MITTELS EINES SOLCHEN SYSTEMS**
VEHICLE LOCKING SYSTEM AND METHOD FOR GAINING ACCESS TO A MOTOR VEHICLE USING SUCH A SYSTEM
SYSTEME DE FERMETURE D'AUTOMOBILE ET PROCEDE POUR PERMETTRE L'ACCES A UNE AUTOMOBILE AU MOYEN D'UN TEL SYSTEME

(30) Priorität: 04.05.2005 DE 102005021377
(43) Veröffentlichungstag der Anmeldung: 23.01.2008
(73) Patentinhaber: Huf Hülsbeck & Fürst GmbH & Co. KG, 42551 Velbert (DE)
(72) Erfinder: STEEGMANN, Bernd, 42579 Heiligenhaus (DE); KLEIN, Helmut, 42549 Velbert (DE)
(74) Vertreter: Zenz
(86) Internationale Anmeldenummer: PCT/EP2006/003269
(87) Internationale Veröffentlichungsnummer: WO 2006/117058

(56) Entgegenhaltungen:
- DE-A1- 10 151 034
- DE-A1- 19 957 549
- DE-T2- 69 816 429

## Beschreibung

Die Erfindung betrifft ein Kraftfahrzeugschließsystem mit wenigstens einem von einem Benutzer mitführbaren ID-Geber ("Schlüssel"), der einen Sendeempfänger und Codiereinrichtungen aufweist, und mit mehreren Kommunikationsmodulen, die jeweils in einer Türbaugruppe des Kraftfahrzeugs untergebracht und mit einer Türschloß-Betätigungseinrichtung verbunden sind. Ferner betrifft die Erfindung Verfahren zum Erlangen des Zugangs zu einem Kraftfahrzeug mittels eines solchen Kraftfahrzeugschließsystems.

Kraftfahrzeugschließsysteme, die einen Zugang zu einem Kraftfahrzeug ohne aktive Betätigung eines ID-Gebers (Schlüssels) durch einen Benutzer ermöglichen, sind im Stand der Technik bekannt. Beispielsweise beschreibt DE 199 01 364 A1 ein solches Kraftfahrzeugschließsystem DE 101 51 034 A1 beschreibt ein Kraftfahrzeugschliesssystem mit wenigstens einem von einem Benutzer mitführbaren ID-Geber, der einen Sendeempfänger und Codiereinrichtungen aufweist, und mehreren Kommunikationsmodulen die mit einer zügehörigen Türschlossbetätigungseinrichtung verbunden sind, wobei jedes Kommunikationsmodul einen Sender und einen Empfänger zur Ausführung einer bidirektionalen drahtlosen Kommunikation mit dem Sendeempfänger des ID-Gebers aufweist, wobei die bidirektionale drahtlose Kommunikation ein Senden wenigstens eines Aktivierungssignals an den ID-Geber und ein Empfangen wenigstens eines identifizierenden Rückmeldesignals aus dem ID-Geber einschliesst, wobei jedes Kommunikationsmodul ferner so ausgebildet ist, dass die Kommunikationsmodule unter Nutzung ihres Senders und ihres Empfängers untereinander drahtlos bidirektional kommunizieren können, so dass Signalübertragungsleitungen zwischen Kommunikationsmodulen entfallen, und wobei wenigstens eines der Kommunikationsmodule eine Überprüfung der Berechtigung des ID-Gebers auf der Grundlage des identifizierenden Rückmeldesignals durchführen. Üblicherweise umfassen derartige Schließsysteme mehrere in einem Kraftfahrzeug unter-gebrachte Baugruppen, die untereinander durch verschiedene Bussysteme miteinander gekoppelt sind. Das in der genannten Offenlegungsschrift beschriebene System umfaßt beispielsweise sogenannte "Keyless Entry"-Sensoren, die in den Außenrückspiegeln und einer Heckbaugruppe untergebracht sind und eine bidirektionale Kommunikation mit dem ID-Geber ermöglichen. Im Innenraum des Kraftfahrzeugs der bekannten Anordnung ist ferner ein induktiv arbeitender "Keyless Go"-Sender angeordnet. Die "Keyless Entry"-Sensoren und der "Keyless Go"-Sender sind über einen Sensor-Bus mit einem zentralen Steuergerät, das am Zündschloß angeordnet ist, verbunden. Darüber hinaus sind bei der bekannten Anordnung Türmodule in der Nähe der Türschlösser und ein Heckmodul am Heckschloß angeordnet, die über ein Bussystem ebenfalls mit dem zentralen Steuergerät verbunden sind. Die Montage der bekannten Anordnung verursacht aufgrund des erheblichen Verkabelungsaufwands hohe Kosten. Aufgabe der Erfindung ist es, die Kosten eines derartigen Kraftfahrzeugschließsystems bei gleicher oder höherer Flexibilität zu senken.

Diese Aufgabe wird erfindungsgemäß durch ein Kraftfahrzeugschließsystem mit den Merkmalen des Patentanspruchs 1 bzw. durch Verfahren zum Erlangen des Zugangs zu einem Kraftfahrzeug mittels eines Kraftfahrzeugschließsystems gemäß den Ansprüchen 10 oder 11 gelöst.

Das erfindungsgemäße Kraftfahrzeugschließsystem umfaßt wenigstens einen von einem Benutzer mitführbaren ID-Geber (auch Schlüssel genannt), der einen Sendeempfänger und Codiereinrichtungen aufweist, sowie mehrere Kommunikationsmodule, die jeweils in einer Türbaugruppe des Kraftfahrzeugs untergebracht und mit einer Türschloßbetätigungseinrichtung verbunden sind. Der Sendeempfänger stellt eine beliebige Schaltungsanordnung dar, die ein drahtloses Senden und Empfangen vorgegebener Signale ermöglicht. Die Codiereinrichtungen sind beliebige Schaltungsanordnungen, die das Abstrahlen eines den ID-Geber identifizierenden codierten Signals ermöglichen. Die Kommunikationsmodule können eine kompakte mit der Türschloßbetätigungseinrichtung verbundene Baueinheit darstellen; alternativ können sie mehrere über Steuer- und Spannungsversorgungsleitungen miteinander verbundene Schaltungsmodule umfassen, die in einer Türbaugruppe des Kraftfahrzeugs untergebracht sind. Jedes Kommunikationsmodul weist einen Sender und Empfänger zur Ausführung einer bidirektionalen drahtlosen Kommunikation mit dem Sendeempfänger des ID-Gebers auf, wobei die bidirektionale drahtlose Kommunikation ein Senden wenigstens eines Aktivierungssignals an den ID-Geber und ein Empfangen wenigstens eines identifizierenden Rückmeldesignals aus dem ID-Geber einschließt. Neben der Übertragung des Aktivierungssignals und des identifizierenden Rückmeldesignals können bei einigen Ausführungsformen zwischen diesen Übertragungen und danach weitere Signalaustausche stattfinden, wobei das Protokoll des Signalaustauschs so gewählt wird, daß eine Energieeinsparung (insbesondere im ID-Geber) und eine hohe Sicherheit gegenüber unerwünschten Eingriffen erreicht wird. Erfindungsgemäß ist jedes Kommunikationsmodul ferner so ausgebildet, daß es unter Nutzung seines Senders und Empfängers mit jedem anderen Kommunikationsmodul drahtlos bidirektional kommunizieren kann. Somit können Signalübertragungsleitungen zwischen den Kommunikationsmodulen und/oder zu einem zentralen Steuergerät entfallen. Die Kommunikationsmodule brauchen lediglich noch an die Spannungsversorgungsleitungen angekoppelt zu werden. Erfindungsgemäß ist ferner vorgesehen, daß wenigstens eines der Kommunikationsmodule eine Überprüfung der Berechtigung des ID-Gebers auf der Grundlage des identifizierenden Rückmeldesignals durchführen und das Ergebnis der Überprüfung an die anderen Kommunikationsmodule übermitteln kann. Hierbei braucht das die Überprüfung der Berechtigung durchführende Kommunikationsmodul nicht mit demjenigen Kommunikationsmodul identisch zu sein, das jeweils den Dialog mit dem Sendeempfänger des ID-Gebers durchgeführt hat.

Die Erfindung basiert auf der Grunderkenntnis, daß in den den Türmodulen räumlich zugeordneten "Keyless Entry"-Sensoren bereits sämtliche Elemente für eine bidirektionale Kommunikation zwischen den Türmodulbaugruppen vorhanden sind. Das Zusammenfassen der Türschloß-Betätigungseinrichtung mit den Sendern/Empfängern der "Keyless Entry"-Sensoren zu autonomen Baugruppen (Modulen), die lediglich mit einer Spannungsversorgung zu verbinden sind und die drahtlos untereinander und/oder mit einem im Innenraum untergebrachten weiteren Kommunikationsmodul kommunizieren können, stellt ein wesentliches Element der Erfindung dar. Ein weiterer Grundgedanke der Erfindung ist die Verlagerung der Datenverarbeitung zur Zugangsberechtigungs-überprüfung aus einem zentralen Steuergerät in die Kommunikationsmodule der Türbaugruppen. Die Erfindung ermöglicht das Weglassen eines Bussystems, das die verschiedenen Türbaugruppen miteinander und mit einem zentralen Steuergerät, welches beispielsweise am Zündschloß untergebracht ist, koppelt. Dies verringert den Verkabelungsaufwand erheblich und erhöht die Flexibilität der Montage. Das erfindungsgemäße System ermöglicht die Unterbringung der Einrichtungen zur Berechtigungsüberprüfung (Authentisierung) des ID-Gebers in den Türgriffen. Dies wiederum ermöglicht einen schnelleren Ablauf des Dialogs zwischen dem Erfassen der Annäherung einer Hand des Benutzers an den Griff bis hin zur Freigabe der Schloßentriegelung, da hierfür kein über einen Bus geführter Dialog mit einem zentralen Steuergerät erforderlich wird. Beispielsweise könnte das Kommunikationsmodul des vom Benutzer berührten Griffs auf der Grundlage eines Dialogs mit dem ID-Geber zunächst die Freigabe des zugeordneten Türschlosses bewirken und anschließend erste einen Dialog mit den Kommunikationsmodulen der übrigen Türgriffe beginnen, sofern diese ebenfalls ihre zugehörigen Schlösser betätigen sollen (sogenanntes "Globales Öffnen").

Die Antennen der in den Türbaugruppen untergebrachten Kommunikationsmodulen sind vorzugsweise in den Türgriffe und/oder einer Rückspiegelbaugruppe untergebracht. Hierbei können die Antennen des Senders und die des Empfängers an verschiedenen Orten oder an demselben Ort untergebracht sein. Alternativ können Sender und Empfänger dieselbe Antenne benutzen. Bei einer bevorzugten Ausführungsform des Kraftfahrzeugschließsystems sind die Kommunikationsmodule der Türbaugruppen jeweils in den Türgriffen (Türaußengriffen) untergebracht. Dies ermöglich die Fertigung einer kompakten Türgriff/Türschloß-Baugruppe, in der sämtliche Schließfunktionen einschließlich Authentisierung des Benutzers integriert sein können. Eine solche Türgriff/Türschloß-Baugruppe mit Kommunikationsmodul braucht lediglich noch an die Spannungsversorgung angeschlossen zu werden.

Bei einer Ausführungsform sind die in den Türbaugruppen untergebrachten Kommunikationsmodule jeweils so ausgebildet, daß eine Antenne der Baugruppe derart in der Tür montiert ist, daß sie auch in den Innenraum des Kraftfahrzeugs abstrahlen kann. Dies ermöglicht nicht nur eine Kommunikation mit dem ID-Geber, wenn sich dieser im Kraftfahrzeuginnenraum befindet; es erleichtert auch die Kommunikation mit im Innenraum befindlichen Kommunikationsmodulen sowie mit dem Kommunikationsmodul der gegenüberliegenden Türbaugruppe.

Es ist denkbar, daß eines der Kommunikationsmodule der Türbaugruppen über Signalleitungen mit einem im Innenraum des Kraftfahrzeugs, vorzugsweise am Start-Zündschloß oder Start-Stopp-Schalter untergebrachten Steuergerät verbunden ist, wobei dieses Steuergerät für die Entscheidung über die Fahrberechtigung verantwortlich ist. Bei einer bevorzugten Weiterbildung des erfindungsgemäßen Kraftfahrzeugschließsystems ist jedoch vorgesehen, daß ein weiteres Kommunikationsmodul mit einem Sender und einem Empfänger dem Innenraum des Kraftfahrzeugs zugeordnet ist, wobei seine Antennen in den Innenraum des Kraftfahrzeugs abstrahlen bzw. aus diesem empfangen können, wobei das weitere Kommunikationsmodul ebenfalls so ausgebildet ist, daß es mit den in den Türbaugruppen untergebrachten Kommunikationsmodulen drahtlos bidirektional kommunizieren kann. Vorzugsweise ist das weitere Kommunikationsmodul mit einer Steuereinrichtung gekoppelt, die über die Fahrberechtigung entscheidet. Auf diese Weise wird die gesamte Steuerung der "Keyless Entry"/"Keyless Go"-Funktionen durch die in den Türbaugruppen untergebrachten Kommunikationsmodule zusammen mit dem dem Innenraum zugeordneten Kommunikationsmodul realisiert.

Bei einer bevorzugten Ausführungsform des erfindungsgemäßen Kraftfahrzeugschließsystems sind die Sender und Empfänger der Kommunikationsmodule sowie der Sendeempfänger des ID-Gebers so ausgebildet, daß die drahtlose bidirektionale Kommunikation zwischen den Kommunikationsmodulen sowie mit dem ID-Geber in einem Frequenzbereich zwischen 2 und 100 GHz stattfindet. Beispielsweise kann die Kommunikation bei 24 GHz stattfinden. Im Unterschied zu bisherigen Systemen findet auch die Aktivierung des ID-Gebers ("Wecken") in diesem Frequenzbereich statt. Die hohen Frequenzen ermöglichen hohe Bandbreiten und einen entsprechend hohen Datendurchsatz. Dies verringert wiederum die Dauer des Dialogs und führt zu einer Energieeinsparung. Andererseits gestattet die höhere Datenrate ausgeklügeltere und somit sicherere Protokolle.

Bei beiden Grundausführungsformen des erfindungsgemäßen Verfahrens zum Erlangen des Zugangs zu einem Kraftfahrzeug mittels eines Kraftfahrzeugschließsystems mit wenigstens einem von einem Benutzer mitführbaren ID-Geber, der einen Sendeempfänger und Codiereinrichtungen aufweist, und mit mehreren Kommunikationsmodulen, die jeweils in einer Türbaugruppe des Kraftfahrzeugs untergebracht und dort mit einer Türschloßbetätigungseinrichtung gekoppelt sind, wobei jedes Kommunikationsmodul eine Sendeeinrichtung und eine Empfangseinrichtung zur drahtlosen Kommunikation aufweist, werden zunächst folgende Schritte durchgeführt. Von der Sendeeinrichtung wenigstens eines Kommunikationsmoduls wird ein Aktivierungssignal an den ID-Geber abgestrahlt, wenn sich der ID-Geber in einem vorgegebenen räumlichen Bereich (vorzugsweise in einem vorgegebenen Bereich in der Nähe des Kraftfahrzeugs) befindet. Dann wird das Aktivierungssignal von dem Sendeempfänger des ID-Gebers empfangen und daraufhin von dem Sendeempfänger des ID-Gebers ein identifizierendes Rückmeldesignal abgestrahlt. Das Rückmeldesignal wird dann von der Empfangseinrichtung eines Kommunikationsmoduls empfangen. Nachfolgend unterscheiden sich die beiden Grundausführungsformen. Bei der einen Ausführungsform wird zunächst von dem empfangenden Kommunikationsmodul eine Überprüfung der Zugangsberechtigung des ID-Gebers durchgeführt (Authentisierung). Dann wird im Ergebnis der Überprüfung ein die Berechtigung anzeigendes Signal mit Hilfe der Sendeeinrichtung an die übrigen Kommunikationsmodule übertragen, woraufhin von den Kommunikationsmodulen bei vorliegender Berechtigung die jeweils zugehörigen Türschloßbetätigungseinrichtungen aktiviert werden. Bei der alternativen Ausführungsform wird das Rückmeldesignal von der Empfangseinrichtung eines Kommunikationsmoduls empfangen und ein dem Rückmeldesignal entsprechendes Signal (das heißt ein die Informationen des Rückmeldesignals enthaltendes Signal) über die Sendeeinrichtung des Kommunikationsmoduls abgestrahlt. Über seine Empfangseinrichtung empfängt dann wenigstens ein weiteres Kommunikationsmodul dieses dem Rückmeldesignal entsprechende Signal, woraufhin von diesem weiteren Kommunikationsmodul eine Überprüfung der Zugangsberechtigung des ID-Gebers auf der Basis des dem Rückmeldesignal entsprechenden Signals durchgeführt wird. Bei vorliegender Berechtigung wird die zugehörige Türschloßbetätigungseinrichtung aktiviert. Unter Aktivieren der Türschloßbetätigungseinrichtung soll hierbei verstanden werden, daß die Türschloßbetätigungseinrichtung entweder auf eine Betätigung des Türschlosses vorbereitet wird oder das Türschloß bereits betätigt wird, um es zu öffnen.

Bei einer bevorzugten Ausführungsform des erfindungsgemäßen Verfahrens wird das Aktivierungssignal abgestrahlt, nachdem zuvor erfaßt worden ist, daß sich der ID-Geber in dem vorgegebenen räumlichen Bereich befindet. Dies geschieht vorzugsweise durch einen Annäherungssensor, der eine Annäherung des Benutzers erfaßt und dies als Hinweis auf ein Vorhandensein des ID-Gebers im vorgegebenen räumlichen Bereich deutet. Als Annäherungssensor kann beispielsweise eine kapazitive Sensoreinrichtung angewendet werden, die im Türgriff untergebracht sein kann.

Bei einer bevorzugten Ausführungsform wird nach Empfangen des Aktivierungssignals ein vorgegebener Dialog zwischen dem Sendeempfänger des ID-Gebers und der Sendeeinrichtung bzw. Empfangseinrichtung eines Kommunikationsmoduls ausgeführt. Dieser Dialog umfaßt zunächst das Rücksenden eines ersten Antwortsignals auf das Aktivierungssignal von dem ID-Geber an das Kommunikationsmodul. Dieser Anfangsdialog des Aktivierungssignals und ersten Antwortsignals kann noch vollständig unverschlüsselt und ohne Code-Übertragung erfolgen. Anschließend wird eine Identifikation des Kommunikationsmoduls oder des Fahrzeugs an den ID-Geber gesendet, so daß dieser feststellen kann, ob es sich um das ihm zugeordnete Fahrzeug bzw. Kommunikationsmodul handelt. Der ID-Geber verarbeitet die empfangene Identifikation des Kommunikationsmoduls bzw. Fahrzeugs und sendet ggf. eine Identifikation des ID-Gebers zurück. Dieser erste Austausch von Identifikationssignalen dient der Erkennung der richtigen Zuordnung von ID-Geber (Schlüssel) und Fahrzeug. Anschließend findet ein Dialog statt, in dem verschlüsselte und auf einer Zufallszahlenerzeugung basierende Codes übertragen werden, wobei der richtige Austausch der verschlüsselten Codes schließlich zur Authentisierung des ID-Gebers führt.

Vorteilhafte und/oder bevorzugte Weiterbildungen der Erfindung sind in den Unteransprüchen gekennzeichnet.

Im folgenden wird die Erfindung anhand eines in den Zeichrungen veranschaulichten bevorzugten Ausführungsbeispiels näher beschrieben.

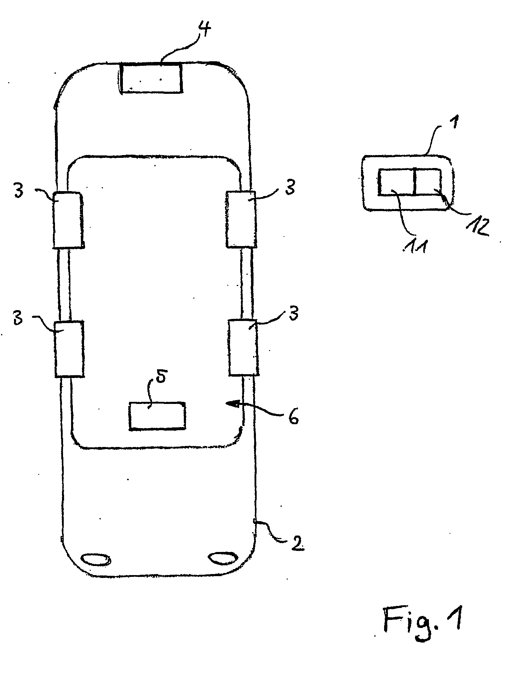

Figur 1 zeigt eine schematische Darstellung der wesentlichen Komponenten einer Ausführungsform des erfindungsgemäßen Kraftfahrzeugschließsystems.

Eine bevorzugte Ausführungsform des erfindungsgemäßen Kraftfahrzeugschließsystems, deren Hauptkomponenten in Figur 1 dargestellt sind, umfaßt mehrere von einem Benutzer mitführbare, auch als "Schlüssel" bezeichnete ID-Geber 1 (von denen einer beispielhaft in Figur 1 gezeigt ist) sowie mehrere im Kraftfahrzeug 2 untergebrachte Kommunikationsmodule 3, 4 und 5. Die Kommunikationsmodule 3 und 4 sind jeweils in einer Türbaugruppe (Seitentür bzw. Hecktür) untergebracht und jeweils mit einer Türschloßbetätigungseinrichtung verbunden. Vorzugsweise sind die Kommunikationsmodule 3 in einem Türaußengriff (TAG) untergebracht. Ein weiteres Kommunikationsmodul 5 ist vorzugsweise im Innenraum 6 des Kraftfahrzeugs 2, beispielsweise im Armaturenbereich, untergebracht und mit einem Start-Stopp-Schalter und einer Steuereinrichtung gekoppelt. Während die Kommunikationsmodule 3 und 4 die Sicherung/Entsicherung der Türen steuern (und gegebenenfalls zusätzlich die Verriegelung/Entriegelung der Türen unterstützen), steuert das weitere Kommunikationsmodul 5 die Fahrberechtigung.

Der ID-Geber 1 enthält neben einer Spannungsversorgung und einer Steuerelektronik einen Sendeempfänger 11 und Codiereinrichtungen 12, wobei mehrere der genannten Komponenten auch zu einer baulichen Einheit verschmelzen können.

Jedes der Kommunikationsmodule 3, 4 und 5 enthält einen Sender und einen Empfänger, um eine bidirektionale drahtlose Kommunikation sowohl mit dem Sendeempfänger des ID-Gebers als auch mit den anderen Kommunikationsmodulen zu ermöglichen. Sender und Empfänger eines Kommunikationsmoduls brauchen nicht vollständig unabhängig voneinander zu arbeiten und können sich Bauelemente teilen, beispielsweise eine gemeinsame Antenne benutzen. Die Kommunikationsmodule 3, 4 und 5 sind weder untereinander noch mit einem zentralen Steuergerät über Signalleitungen gekoppelt. Zur Inbetriebnahme der Kommunikationsmodule brauchen diese lediglich mit den Spannungsversorgungsleitungen (Versorgungsspannung und Masse) gekoppelt zu werden. Die Signalübertragung aus und zu den Kommunikationsmodulen 3, 4 und 5 erfolgt somit ausschließlich drahtlos. Dies ermöglicht eine preiswertere Gesamtanordnung, da die Verlegung der Signal-Bussysteme entfallen kann. Außerdem ermöglicht dies eine flexiblere Montage der Kommunikationsmodule, da bei der Wahl und Gestaltung des Einbauortes lediglich die Zufuhr der Spannungsversorgung in Betracht zu ziehen ist. Die Sende- und Empfangsantennen der Kommunikationsmodule 3, 4 und 5 sind so angeordnet, daß sich jeweils eine gewünschte räumliche Abstrahl- bzw. Empfangscharakteristik ergibt. Die Sende- bzw. Empfangsantennen der Module 3 und 4 sind vorzugsweise in den Türaußengriffen untergebracht und können mit einem ID-Geber in einem vorgegebenen räumlichen Bereich außerhalb des Kraftfahrzeugs kommunizieren. Zusätzlich kann die Anordnung der Sende-/Empfangsantennen der Module 3 und 4 so ausgebildet sein, daß auch eine Kommunikation mit einem im Innenraum 6 angeordneten ID-Geber 1 möglich wird. Die Sende-/Empfangsantenne des Kommunikationsmoduls 5 sind so ausgerichtet, daß sie mit einem in dem Innenraum 6 befindlichen ID-Geber 1 kommunizieren können.

Die Antennen der Kommunikationsmodule 3, 4 und 5 sind beispielsweise als Patch-Antennen ausgebildet. Vorzugsweise sind sie an einer äußeren Oberfläche des Türaußengriffs oder der Tür angeordnet.

Der Sendeempfänger 11 des ID-Gebers 1 sowie die Sender und Empfänger der Kommunikationsmodule 3, 4 und 5 sind vorzugsweise so ausgebildet, daß sie im Frequenzbereich zwischen 2 und 100 GHz arbeiten. Beispielsweise ist eine Frequenz zwischen 2 und 10 GHz, beispielsweise 2,45 GHz denkbar. Vorzugsweise wird jedoch eine Frequenz zwischen 20 und 100 GHz, beispielsweise 24 GHz oder 79 GHz gewählt. Es ist auch denkbar, daß unterschiedliche Sende- und Empfangsfrequenzen für einige oder sämtliche Module gewählt werden.

Die Sendeempfänger der Kommunikationsmodule 3,4 und 5 werden zunächst zur bidirektionalen Kommunikation mit einem (oder mehreren) ID-Gebern verwendet. Darüber hinaus können die Sendeempfänger von ihren jeweils zugeordneten Steuereinrichtungen auch so betrieben werden, daß sie gleichzeitig eine Lokalisierung eines ID-Gebers vor oder während der Kommunikation ausführen können. Zusätzlich ist es denkbar, daß die Sendeempfänger mit zugehörigen Steuereinrichtungen als Radar zur Lokalisierung weiterer Gegenstände und zusätzlich zur Bestimmung der Bewegungsrichtung solcher Gegenstände verwendet werden (zum Beispiel als Precrash-Sensoren, als Warnsensor bei der Rückwärtsfahrt und Parkhilfe).

Zum Erlangen des Zugangs zu einem Kraftfahrzeug und zum Erlangen der Fahrberechtigung ist ein bestimmter (protokollgemäßer) Ablauf der Kommunikation zwischen einem ID-Geber 1 und einem oder mehreren Kommunikationsmodulen 3, 4 und 5 sowie zwischen den Kommunikationsmodulen 3, 4 und 5 vorzusehen, der eine Reihe von Anforderungen zu erfüllen hat. Der Kommunikationsablauf ist so zu gestalten, daß der Energieverbrauch sowohl auf der Seite des ID-Gebers 1 als auch - zumindest bei stehendem Fahrzeug - auf der Seite der Kommunikationsmodule 3, 4 und 5 minimiert ist. Darüber hinaus muß die Kommunikation eine Reihe von Betriebsbedingungen berücksichtigen, beispielsweise den Ort des Fahrers und des ID-Gebers (Fahrer bzw. ID-Geber innerhalb oder außerhalb des Fahrzeugs, Hand am Türgriff, Türgriff betätigt, Start-Stopp-Schalter betätigt), den Zustand des Motors (Motor läuft), den Zustand des Fahrzeugs (ruhend oder in Bewegung) und den Zustand der Türverriegelungen (Tür gesichert/entsichert oder verriegelt/entriegelt, Tür offen/geschlossen). Schließlich muß das Kommunikationsverfahren eine Vielzahl von Sicherheitsanforderungen erfüllen, damit der Zugang ausschließlich auf berechtigte Personen, die im Besitz des richtigen ID-Gebers sind, beschränkt bleibt, aber für diese wiederum sicher gewährleistet ist. Die Kommunikation muß ein hohes Maß an Sicherheit sowohl gegenüber einer simulierten Kommunikation eines Unberechtigten aufweisen, die auf einer abgefangenen oder mitgelauschten Kommunikation basiert, als auch sicher gegenüber einer sogenannten "Verlängerung" sein, bei der von einem Unberechtigten eine Kommunikationsbrücke zwischen dem Kraftfahrzeug und dem entfernten, das heißt nicht in der Nähe des Fahrzeugs befindlichen, ID-Geber hergestellt wird, um mit Hilfe des berechtigten ID-Gebers Zugang zu dem entfernt angeordneten Fahrzeug zu erlangen.

Im folgenden werden einige bevorzugte Ausführungsformen des erfindungsgemäßen Verfahren zum Erlangen des Zugangs zu einem Kraftfahrzeug mittels des erfindungsgemäßen Kraftfahrzeugschließsystems beschrieben.

Zunächst wird von der Sendeeinrichtung wenigstens eines der Kommunikationsmodule 3 oder 4 eine Aktivierungssignal an den ID-Geber abgestrahlt. Um ein ständiges oder ständig wiederholtes Abstrahlen eines Aktivierungssignals zu vermeiden (Energieverbrauchsminderung), soll dieses Aktivierungssignal nur dann abgestrahlt werden, wenn sich der ID-Geber in einem vorgegebenen räumlichen Bereich befindet, nämlich dann, wenn sich dessen Träger in der Nähe des Kraftfahrzeugs befindet. Um diese Bedingung sicherzustellen, können die Kommunikationsmodule mit einem Annäherungssensor ausgestattet sein. Dies kann beispielsweise ein kapazitiver Sensor sein, der die Annäherung einer Hand eines Bedieners (der den ID-Geber bei sich trägt) an einen Türaußengriff erfaßt. Eine Entsicherung der Türen ist nämlich grundsätzlich erst dann erforderlich, wenn ein den Zugang zum Kraftfahrzeug wünschender Benutzer eine Tür öffnen möchte und zu diesem Zweck eine Hand zum Türgriff führt.

Bei einer alternativen Ausführungsform könnte der kapazitive Sensor auch entfallen und die Annäherung eines Benutzers anhand von Reflexionen eines von dem Sender im Türaußengriff abgestrahlten Signals (im GHz-Bereich) bestimmt werden. Bei geeigneter Anordnung der Antennen und geeigneter Gestaltung der gesendeten Signale sowie Auswertung der empfangenen reflektierten Signale wäre es denkbar, daß nicht nur der Ort eines sich annähernden Objekts, sondern auch dessen Bewegungsgeschwindigkeit erfaßt werden. Aus den erfaßten Bewegungsgrößen könnte eine Auswertelogik bestimmen, ob sich ein Bediener, der möglicherweise Zugang zu dem Kraftfahrzeug wünscht, annähert. Bei dieser Gestaltung wäre es in zweckmäßiger Weiterbildung zur Reduktion des Energieverbrauchs sinnvoll, das Sendesignal lediglich periodisch wiederholt für kurze Zeit (als Burst oder Bündel) abzustrahlen, beispielsweise für jeweils eine Millisekunde (1 ms) nach jeweils 500 ms. Dieses zur Erfassung der Annäherung eines Objekts ausgestrahlte Signal braucht nicht moduliert zu sein.

Sobald ein Kommunikationsmodul (oder mehrere der Kommunikationsmodule) über jeweils zugehörige Sensoreinrichtungen erfaßt hat, daß sich ein Objekt annähert, welches ein den Zugang wünschender Benutzer sein könnte, wird als nächstes durch den Aufbau einer geeigneten Kommunikation abgefragt, ob sich neben dem Benutzer auch ein ID-Geber in einer vorgegebenen räumlichen Nähe des Kraftfahrzeugs befindet (beispielsweise in der Kleidung des Benutzers oder einer Tasche. Selbstverständlich wäre es theoretisch denkbar, daß der ID-Geber ständig periodisch wiederholt ein Signal abstrahlt, das sein Vorhandensein kennzeichnet. Dies würde jedoch zu einem unzulässig hohen Energieverbrauch in dem ID-Geber führen. Deshalb wird ein umgekehrter Weg gegangen. Sobald (beispielsweise mittels des Annäherungssensors) die Annäherung eines Objekts erfaßt worden ist, das möglicherweise Träger eines ID-Gebers sein könnte, wird von der Sendeeinrichtung des Kommunikationsmoduls ein Rufsignal abgestrahlt, welches von dem ID-Geber empfangen werden kann. Bei einer Ausführungsform könnte der ID-Geber ständig empfangsbereit sein, so daß er das Rufsignal sofort erfaßt und daraufhin ein Antwortsignal senden kann. Aus Gründen der Energieeinsparung ist es jedoch vorzuziehen, einen ID-Geber zu verwenden, der nur jeweils für kurze Zeit periodisch in eine Empfangsbereitschaft gebracht wird, beispielsweise für einen sehr kurzen Zeitraum von ca. 10 µs nach jeweils einem längeren Ruheintervall von beispielsweise 100 ms. Damit der ID-Geber innerhalb einer Empfangsbereitschaftsperiode ein vom Kommunikationsmodul abgestrahltes Rufsignal auch erfassen kann, ist die wiederholte Abstrahlung des Rufsignals auf der Seite des Kommunikationsmoduls erforderlich. Das Rufsignal ist periodisch in einem Abstand abzustrahlen, der geringer ist als die Empfangsbereitschaftsperiode des ID-Gebers (wobei technologische Toleranzen zu berücksichtigen sind). Die Gesamtdauer der periodischen Abstrahlung des Rufsignals muß größer als das Ruheintervall zwischen zwei Empfangsbereitschaftsperioden des ID-Gebers sein. Um bei dem genannten Beispiel einer Empfangsbereitschaft von 10 µs im Abstand von jeweils 100 ms zu bleiben: Das Rufsignal ist hierbei beispielsweise innerhalb einer Gesamtdauer von 100 ms jeweils nach 5 µs abzustrahlen.

Bei einer alternativen Ausführungsform ist es auch denkbar, daß auf die Erfassung der Annäherung des Benutzers verzichtet wird und lediglich die Annäherung des ID-Gebers erfaßt wird, indem ständig wiederholt ein Rufsignal innerhalb eines begrenzten Bereichs abgestrahlt wird und das Eingehen eines Antwortsignals als Hinweis erfaßt wird, daß sich der ID-Geber in einem vorgegebenen räumlichen Bereich befindet.

Sowohl das Rufsignal als auch das Antwortsignal brauchen nicht moduliert zu sein. Bei einer bevorzugten Ausführungsform jedoch enthält das Rufsignal bereits Daten, die das Kraftfahrzeug bzw. das Schließsystem kennzeichnen. In diesem Fall enthält der ID-Geber eine Auswertelogik, die das Rufsignal auswertet, so daß der ID-Geber nur dann ein Antwortsignal sendet, wenn er zum gekennzeichneten Schließsystem gehört.

Auch das Antwortsignal kann codierte Daten enthalten, welche den ID-Geber kennzeichnen und welche dann von dem Kommunikationsmodul, welches das Antwortsignal empfangen hat, ausgewertet werden können, bevor die zweiseitige Kommunikation fortgesetzt wird.

Nach dem Empfang des Antwortsignals durch ein oder mehrere Kommunikationsmodule beginnt ein Kommunikationsmodul (vorzugsweise dasjenige Kommunikationsmodul, bei dem die Annäherung des Benutzers erfaßt worden ist) einen weiteren Dialog mit dem ID-Geber, in dessen Rahmen zunächst der ID-Geber mit einem Aktivierungssignal veranlaßt wird, in einen Authentisierungsdialog einzutreten. Im Rahmen des Dialogs senden dann der ID-Geber ein ihn identifizierendes Rückmeldesignal oder auch mehrere den ID-Geber stufenweise identifizierende Rückmeldesignale. Die Details eines solchen Authentisierungsdialogs sollen an dieser Stelle nicht näher beschrieben werden, da sie für die hier beschriebene Erfindung von untergeordneter Bedeutung sind. Nachdem jedenfalls das eine oder die mehreren Rückmelde-signale von der Empfangseinrichtung eines Kommunikationsmoduls empfangen worden sind, wird (gegebenenfalls stufenweise) eine Überprüfung der Zugangsberechtigung des ID-Gebers durchgeführt. Während des Dialogs zur Authentisierung kann bei einigen Ausführungsformen auch gleichzeitig ein Ort des ID-Gebers, beispielsweise mit Hilfe von Laufzeitmessungen, ermittelt werden, um die oben genannte Gefahr der Funkverlängerung zu verringern.

Nachdem im Ergebnis der Überprüfung die Berechtigung des ID-Gebers festgestellt worden ist, wird von einem Kommunikationsmodul ein die Berechtigung anzeigendes Signal mit Hilfe seiner Sendeeinrichtung an die übrigen Kommunikationsmodule übertragen. Anschließend werden von den Kommunikationsmodulen bei vorliegender Berechtigung die jeweils zugehörigen Türschloßbetätigungseinrichtungen aktiviert. Vorzugsweise wird die Zugangsberechtigung zunächst bei demjenigen Kommunikationsmodul ermittelt, an das sich der Benutzer angenähert hat (an dessen Türgriff sich beispielsweise seine Hand annäherte). Wenn dieses Kommunikationsmodul die Zugangsberechtigung festgestellt hat, könnte es zunächst die zugehörige Tür freigeben (entsichern) und dann diese Freigabe an die übrigen Kommunikationsmodule übermitteln. Es könnte auch umgekehrt zunächst die Zugangsberechtigung an die anderen Kommunikationsmodule übermitteln und dann oder parallel dazu die zugehörige Tür entsichern. Ob die anderen Kommunikationsmodule an den Außentüren ebenfalls ihre zugehörigen Türschlösser entsichern, hängt von den gewählten Einstellungen des Gesamtsystems ab. Beispielsweise wäre es denkbar, daß bei Zugriff auf das Heckschloß lediglich die Hecktür, nicht aber die übrigen Türen entriegelt werden. Die Zugangsberechtigung wird üblicherweise auch an das weitere Kommunikationsmodul 5 im Innenraum des Kraftfahrzeugs übermittelt, welches mit einer Steuereinrichtung gekoppelt ist, die über die Fahrberechtigung entscheidet. Sobald dann der Benutzer im Innenraum des Fahrzeugs den Start-Schalter betätigt und parallel dazu festgestellt worden ist, daß sich der ID-Geber ebenfalls im Innenraum des Fahrzeugs befindet, kann das Starten des Motors freigegeben werden.

Bei einer bevorzugten Ausführungsform findet die Authentisierung dezentral statt. Dies bedeutet, daß jeweils dasjenige Kommunikationsmodul die Authentisierung durchführt, an welches sich der Bediener mit dem ID-Geber annähert. Die dezentrale Authentisierung erhöht die Zuverlässigkeit des Systems. Wenn beispielsweise die Authentisierung innerhalb eines Kommunikationsmoduls ausfällt, so kann die Authentisierung noch über ein anderes Kommunikationsmodul vorgenommen werden.

## Patentansprüche

1. Kraftfahrzeugschließsystem mit
wenigstens einem von einem Benutzer mitführbaren ID-Geber (1), der einen Sendeempfänger (11) und codiereinrichtungen (12) aufweist, und
mehreren Kommunikationsmodulen (3, 4), die jeweils in einer Türbaugruppe des Kraftfahrzeugs (2) untergebracht und jeweils mit einer zugehörigen Türschloßbetätigungseinrichtung verbunden sind,
wobei jedes Kommunikationsmodul (3, 4) einen Sender und einen Empfänger zur Ausführung einer bidirektionalen drahtlosen Kommunikation mit dem Sendeempfänger (11) des ID-Gebers (1) aufweist, wobei die bidirektionale drahtlose Kommunikation ein Senden wenigstens eines Aktivierungssignals an den ID-Geber und ein Empfangen wenigstens eines identifizierenden Rückmeldesignals aus dem ID-Geber einschließt,
wobei jedes Kommunikationsmodul (3, 4) ferner so ausgebildet ist, daß die Kommunikationsmodule unter Nutzung ihres Senders und ihres Empfängers untereinander drahtlos bidirektional kommunizieren können, so daß Signalübertragungsleitungen zwischen Kommunikationsmodulen entfallen, und
wobei wenigstens eines der Kommunikationsmodule (3, 4) eine Überprüfung der Berechtigung des ID-Gebers auf der Grundlage des identifizierenden Rückmeldesignals durchführen und das Ergebnis der Überprüfung an die anderen Kommunikationsmodule übermitteln kann.

2. Kraftfahrzeugschließsystem nach Anspruch 1, **dadurch gekennzeichnet, daß** Antennen der in den Türbaugruppen untergebrachten Kommunikationsmodule (3, 4) in den Türgriffen und/oder in einer Rückspiegelbaugruppe untergebracht sind.

3. Kraftfahrzeugschließsystem nach Anspruch 2, **dadurch gekennzeichnet, daß** die Kommunikationsmodule jeweils in den Türgriffen untergebracht sind.

4. Kraftfahrzeugschließsystem nach einem der Ansprüche 1 - 3, **dadurch gekennzeichnet, daß** jeweils eine Antenne der in den Türbaugruppen untergebrachten Kommunikationsmodule derart in der Tür montiert ist, daß sie auch in den Innenraum abstrahlen kann.

5. Kraftfahrzeugschließsystem nach einem der Ansprüche 1 - 4, **dadurch gekennzeichnet, daß** ein weiteres Kommunikationsmodul (5) mit einem Sender und einem Empfänger dem Innenraum (6) des Kraftfahrzeugs (2) zugeordnet ist, wobei seine Antennen in den Innenraum des Kraftfahrzeugs abstrahlen bzw. aus diesem empfangen können, wobei das weitere Kommunikationsmodul (5) ebenfalls so ausgebildet ist, daß es mit den in den Türbaugruppen untergebrachten Kommunikationsmodulen (3, 4) drahtlos bidirektional kommunizieren kann.

6. Kraftfahrzeugschließsystem nach Anspruch 5, **dadurch gekennzeichnet, daß** das weitere Kommunikationsmodul (5) mit einer Steuereinrichtung gekoppelt ist, die über die Fahrberechtigung entscheidet.

7. Kraftfahrzeugschließsystem nach einem der Ansprüche 1 - 6, **dadurch gekennzeichnet, daß** die Sender und Empfänger der Kommunikationsmodule (3, 4, 5) sowie der Sendeempfänger (11) des ID-Gebers (1) so ausgebildet sind, daß die drahtlose bidirektionale Kommunikation sowohl zwischen den Kommunikationsmodulen und dem ID-Geber als auch zwischen den Kommunikationsmodulen in einem Frequenzbereich zwischen 2 und 100 GHz stattfindet.

8. Kraftfahrzeugschließsystem nach Anspruch 7, **dadurch gekennzeichnet, daß** die Antennen der Sender und Empfänger als Patch-Antennen ausgebildet sind.

9. Kraftfahrzeugschließsystem nach einem der Ansprüche 1 - 8, **dadurch gekennzeichnet, daß** die Kommunikationsmodule so ausgebildet sind, daß die bidirektionale Kommunikation zwischen den Kommunikationsmodulen verschlüsselt wird.

10. Verfahren zum Erlangen des Zugangs zu einem Kraftfahrzeug mittels eines Kraftfahrzeugschließsystems mit wenigstens einem von einem Benutzer mitführbaren ID-Geber, der einen Sendeempfänger und Codiereinrichtungen aufweist, und mit mehreren Kommunikationsmodulen, die jeweils in einer Türbaugruppe des Kraftfahrzeugs untergebracht und dort jeweils mit einer zugehörigen Türschloßbetätigungseinrichtung gekoppelt sind, wobei jedes Kommunikationsmodul eine Sendeeinrichtung und eine Empfangseinrichtung zur drahtlosen Kommunikation aufweist, wobei:
a) von der Sendeeinrichtung wenigstens eines Kommunikationsmoduls ein Aktivierungssignal an den ID-Geber abgestrahlt wird, wenn sich der ID-Geber in einem vorgegebenen räumlichen Bereich befindet,
b) das Aktivierungssignal von dem Sendeempfänger des ID-Gebers empfangen und daraufhin von dem Sendeempfänger des ID-Gebers ein identifizierendes Rückmeldesignal abgestrahlt wird,
c) das Rückmeldesignal von der Empfangseinrichtung eines Kommunikationsmoduls empfangen wird, woraufhin von dem empfangenden Kommunikationsmodul
c1) eine Überprüfung der Zugangsberechtigung des ID-Gebers durchgeführt wird, und
c2) im Ergebnis der Überprüfung ein die Berechtigung anzeigendes Signal mit Hilfe der Sendeeinrichtung an die übrigen Kommunikationsmodule übertragen wird, und
d) von den Kommunikationsmodulen bei vorliegender Berechtigung die jeweils zugehörigen Türschloßbetätigungseinrichtungen aktiviert werden.

11. Verfahren zum Erlangen des Zugangs zu einem Kraftfahrzeug mittels eines Kraftfahrzeugschließsystems mit wenigstens einem von einem Benutzer mitführbaren ID-Geber, der einen Sendeempfänger und Codiereinrichtungen aufweist, und mit mehreren Kommunikationsmodulen, die jeweils in einer Türbaugruppe des Kraftfahrzeugs untergebracht und jeweils mit einer zugehörigen Türschloßbetätigungseinrichtung gekoppelt sind, wobei jedes Kommunikationsmodul eine Sendeeinrichtung und eine Empfangseinrichtung zur drahtlosen Kommunikation aufweist, wobei:
a) von der Sendeeinrichtung wenigstens eines Kommunikationsmoduls ein Aktivierungssignal an den ID-Geber abgestrahlt wird, wenn sich der ID-Geber in einem vorgegebenen räumlichen Bereich befindet,
b) das Aktivierungssignal von dem Sendeempfänger des ID-Gebers empfangen wird und daraufhin von dem Sendeempfänger des ID-Gebers ein identifizierendes Rückmeldesignal abgestrahlt wird,
c) das Rückmeldesignal von der Empfangseinrichtung eines Kommunikationsmoduls empfangen wird und ein dem Rückmeldesignal entsprechendes Signal über die Sendeeinrichtung des Kommunikationsmoduls abgestrahlt wird, und
d) über die Empfangseinrichtung wenigstens eines weiteren Kommunikationsmoduls das dem Rückmeldesignal entsprechende Signal empfangen wird, woraufhin von dem wenigstens einen weiteren Kommunikationsmodul eine Überprüfung der Zugangsberechtigung des ID-Gebers auf der Basis des dem Rückmeldesignal entsprechenden Signals durchgeführt und bei vorliegender Berechtigung die zugehörige Türschloßbetätigungseinrichtung aktiviert wird.

12. Verfahren nach Anspruch 10 oder 11, **dadurch gekennzeichnet, daß** im Schritt a) das Aktivierungssignal abgestrahlt wird, wenn zuvor erfaßt worden ist, daß sich der ID-Geber in dem vorgegebenen räumlichen Bereich befindet.

13. Verfahren nach Anspruch 12, **dadurch gekennzeichnet, daß** das Vorhandensein des ID-Gebers in dem vorgegebenen räumlichen Bereich durch einen Annäherungssensor, der eine Annäherung des Benutzers erfaßt, erfaßt wird.

14. Verfahren nach einem der Ansprüche 10 - 13, **dadurch gekennzeichnet, daß** in den Schritten b) und c) nach Empfangen des Aktivierungssignals ein vorgegebener Dialog zwischen dem Sendeempfänger des ID-Gebers und der Sendeeinrichtung bzw. Empfangseinrichtung eines Kommunikationsmoduls ausgeführt wird, der zunächst das Rücksenden eines ersten Antwortsignals auf das Aktivierungssignal von dem ID-Geber an das Kommunikationsmodul, anschließend das Senden einer Identifikation des Kommunikationsmoduls oder des Fahrzeugs an den ID-Geber, nach Empfangen und Verarbeitung dieser Identifikation durch den ID-Geber das Rücksenden einer Identifikation des ID-Gebers und schließlich den Austausch einer auf einer Zufallszahl basierenden verschlüsselten Kommunikation umfaßt.

15. Verfahren nach Anspruch 14, **dadurch gekennzeichnet, daß** die auf einer Zufallszahl basierende verschlüsselte Kommunikation eine Übertragung einer Zufallszahl von dem Kommunikationsmodul an den ID-Geber und anschließend die Rückübertragung eines auf der Zufallszahl basierenden verschlüsselten Signals an das Kommunikationsmodul umfaßt.

## Claims

1. A motor vehicle locking system with at least one ID transmitter (1), which may be carried by a user and includes a transceiver (11) and encoding devices (12), and a plurality of communication modules (3, 4) which are accommodated in a respective door assembly of the motor vehicle (2) and are connected to a respective door lock actuating device, wherein each communication module (3, 4) includes a transmitter and a receiver for performing bidirectional wireless communication with the transceiver (11) of the ID transmitter (1), wherein the bidirectional wireless communication includes transmitting at least one activation signal to the ID transmitter and receiving at least one identifying acknowledgement signal from the ID transmitter, wherein each communication module (3, 4) is further so constructed that the communication modules can wirelessly communicate bidirectionally with one another by using their transmitters and their receivers so that signal transmission lines between communication modules are omitted, and wherein at least one of the communication modules (3, 4) can perform a check of the authorisation of the ID transmitter on the basis of the identifying acknowledgment signal and transmit the result of the check to the other communication modules.

2. A motor vehicle locking system as claimed in claim 1, **characterised in that** antennas of the communication modules (3, 4) accommodated in the door assemblies are accommodated in the door handles and/or in a rear view mirror assembly.

3. A motor vehicle locking system as claimed in claim 2, **characterised in that** the communication modules are respectively accommodated in the door handles.

4. A motor vehicle locking system as claimed in one of claims 1-3, **characterised in that** each antenna of the communication modules accommodated in the door assemblies is mounted in the door such that it can also transmit into the interior.

5. A motor vehicle locking system as claimed in one of claims 1-4, **characterised in that** a further communication module (5) with a transmitter and a receiver is associated with the interior (6) of the motor vehicle (2), whereby its antennas transmit into the interior of the motor vehicle and can receive from it, whereby the further communication module (5) is also so constructed that it can wirelessly communicate bidirectionally with the communication modules (3,4) accommodated in the door assemblies.

6. A motor vehicle locking system as claimed in claim 5, **characterised in that** the further communication module (5) is coupled to a control device, which makes a decision on the authority to drive.

7. A motor vehicle locking system as claimed in one of claims 1-6, **characterised in that** the transmitters and receivers of the communication modules (3, 4, 5) and the transceiver (11) of the ID transmitter (1) are so constructed that the wireless, bidirectional communication occurs not only between the communication modules and the ID transmitter but also between the communication modules within a frequency range between 2 and 100GHz.

8. A motor vehicle locking system as claimed in claim 7, **characterised in that** the antennas of the transmitters and receivers are constructed in the form of patch antennas.

9. A motor vehicle locking system as claimed in one of claims 1-8, **characterised in that** the communication modules are so constructed that the bidirectional communication between the communication modules is encrypted.

10. A method of gaining access to a motor vehicle by means of a motor vehicle locking system with at least one ID transmitter, which may be carried by a user and includes a transceiver and encoding devices, and with a plurality of communication modules, which are respectively accommodated in a door assembly of the motor vehicle and are coupled there to an associated door lock actuating device, wherein each communication module includes a transmitting device and a receiving device for wireless communication, wherein:
a) an activation signal is emitted from the transmitting device of at least one communication module to the ID transmitter when the ID transmitter is situated in a predetermined spatial region,
b) the activation signal is received by the transceiver of the ID transmitter and an identifying acknowledgement signal is then emitted by the transceiver of the ID transmitter,
c) the acknowledgement signal is received by the receiving device of a communication module, whereafter the receiving communication module,
c1) performs a check of the access authorisation of the ID transmitter and,
c2) as a result of the check a signal indicating authorisation is transmitted with the aid of the transmitting device to the other communication modules, and
d) when authorisation is present, the respective associated door lock actuating devices are activated by the communication modules.

11. A method of gaining access to a motor vehicle by means of a motor vehicle locking system with at least one ID transmitter which may be carried by a user and includes a transceiver and encoding devices, and with a plurality of communication modules, which are respectively accommodated in a door assembly of the motor vehicle and are coupled to an associated door lock actuating device, wherein each communication module includes a transmitting device and a receiving device for wireless communication, wherein:
a) an activation signal is emitted from the transmitting device of at least one communication module to the ID transmitter when the ID transmitter is situated in a predetermined spatial region,
b) the activation signal is received by the transceiver of the ID transmitter and an identifying acknowledgement signal is then emitted by the transceiver of the ID transmitter,
c) the acknowledgement signal is received by the receiving device of a communication module and a signal corresponding to the acknowledgement signal is emitted via the transmitting device of the communication module, and
d) the signal corresponding to the acknowledgment signal is received via the receiving device of at least one further communication module, whereafter a check of the access authorisation of the ID transmitter is performed by the at least one further communication module on the basis of the signal corresponding to the acknowledgement signal and, when authorisation is present, the associated door lock actuation device is activated.

12. A method as claimed in claim 10 or 11, **characterised in that** in step a) the activation signal is emitted when it has been previously been determined that the ID transmitter is situated in the predetermined spatial region.

13. A method as claimed in claim 12, **characterised in that** the presence of the ID transmitter in the predetermined spatial region is detected by a proximity sensor, which detects the approach of the user.

14. A method as claimed in one of claims 10-13, **characterised in that** in steps b) and c) after receiving the activation signal, a predetermined dialogue is conducted between the transceiver of the ID transmitter and the transmitting device or receiving device of a communication module, which includes firstly the sending back of a first answer signal to the activation signal from the ID transmitter to the communication module, then the sending of an identification of the communication module or of the motor vehicle to the ID transmitter, after receipt and processing of this identification via the ID transmitter the sending back of an identification of the ID transmitter and finally the exchange of an encrypted communication based on a random number.

15. A method as claimed in claim 14, **characterised in that** the encrypted communication based on a random number includes the transmission of a random number by the communication module to the ID transmitter and then the transmission back to the communication module of encrypted signal based on the random number.

## Revendications

1. Système de fermeture d'automobile comportant
au moins un générateur d'identification (1), qu'un utilisateur peut avoir avec lui et qui comprend un émetteur-récepteur (11) et des dispositifs de codage (12), et
plusieurs modules de communication (3, 4) qui sont montés respectivement dans un groupe de portes du véhicule (2) et qui sont reliés chacun à un dispositif d'actionnement de serrure de porte associé,
dans lequel chaque module de communication (3, 4) comprend un émetteur et un récepteur pour l'exécution d'une communication sans fil bidirectionnelle avec l'émetteur-récepteur (11) du générateur d'identification (1), la communication sans fil bidirectionnelle incluant une émission d'au moins un signal d'activation à destination du générateur d'identification et une réception d'au moins un signal de réponse, identifiant, provenant du générateur d'identification,
dans lequel chaque module de communication (3, 4) est en outre agencé de façon que les modules de communication peuvent communiquer sans fil d'une manière bidirectionnelle entre eux en utilisant leur émetteur et leur récepteur, de sorte que des câbles de transmission de signal ne sont pas nécessaires entre des modules de communication, et
dans lequel au moins l'un des modules de communication (3, 4) peut effectuer une vérification de l'autorisation du générateur d'identification et transmettre le résultat de la vérification aux autres modules de communication.

2. Système de fermeture d'automobile suivant la revendication 1, **caractérisée en ce que** des antennes des modules de communication (3, 4) montés dans les groupes de portes sont montées dans les poignées de porte et/ou dans un groupe de rétroviseurs.

3. Système de fermeture d'automobile suivant la revendication 2, **caractérisé en ce que** les modules de communication sont respectivement placés dans les poignées de porte.

4. Système de fermeture d'automobile suivant l'une des revendications 1-3, **caractérisé en ce que** respectivement une antenne des modules de communication montés dans les groupes de portes est disposée dans la porte de façon telle qu'elle peut également rayonner dans l'habitacle.

5. Système de fermeture d'automobile suivant l'une des revendications 1-4, **caractérisé en ce qu'**un module de communication (5) supplémentaire comprenant un émetteur et un récepteur est associé à l'habitacle (6) du véhicule (2), son antenne pouvant rayonner dans l'habitacle du véhicule ou recevoir à partir de celui-ci, le module de communication (5) supplémentaire étant également agencé de façon telle qu'il peut communiquer sans fil de manière bidirectionnelle avec les modules de communication (3, 4) montés dans les groupes de portes.

6. Système de fermeture d'automobile suivant la revendication 5, **caractérisé en ce que** le module de communication (5) supplémentaire est couplé avec un dispositif de commande qui décide de l'autorisation de conduire.

7. Système de fermeture d'automobile suivant l'une des revendications 1-6, **caractérisé en ce que** les émetteurs et récepteurs des modules de communication (3, 4, 5) ainsi que l'émetteur-récepteur (11) du générateur d'identification (1) sont agencés de façon telle que la communication sans fil bidirectionnelle a lieu aussi bien entre les modules de communication et le générateur d'identification qu'entre les modules de communication dans une gamme de fréquences comprise entre 2 et 100 GHz.

8. Système de fermeture d'automobile suivant la revendication 7, **caractérisé en ce que** les antennes des émetteurs et récepteurs sont agencées sous forme d'antennes planaires.

9. Système de fermeture d'automobile suivant l'une des revendications 1-8, **caractérisé en ce que** les modules de communication sont agencés de façon telle que la communication bidirectionnelle entre les modules de communication est cryptée.

10. Procédé d'obtention d'accès à une automobile au moyen d'un système de fermeture d'automobile comportant au moins un générateur d'identification qu'un utilisateur peut avoir avec lui et qui comprend un émetteur-récepteur et des dispositifs de codage, et plusieurs modules de communication qui sont montés respectivement dans un groupe de portes et qui y sont couplés respectivement avec un dispositif d'actionnement de serrure de porte associé, chaque module de communication comprenant un dispositif émetteur et un dispositif récepteur pour la communication sans fil, selon lequel :
a) à partir du dispositif émetteur d'au moins un module de communication, un signal d'activation est rayonné à destination du générateur d'identification lorsque le générateur d'identification se trouve dans une zone spatiale préfixée,
b) le signal d'activation est reçu par l'émetteur-récepteur du générateur d'identification et en conséquence un signal de réponse identifiant est rayonné par l'émetteur-récepteur du générateur d'identification,
c) le signal de réponse est reçu par le dispositif récepteur d'un module de communication, donc sous l'action du module de communication qui reçoit,
c1) une vérification de l'autorisation d'accès du générateur d'identification est effectuée, et
c2) comme résultat de la vérification, un signal indiquant l'autorisation est transmis aux autres modules de communication au moyen du dispositif émetteur, et
d) sous l'action des modules de communication, lorsqu'une autorisation est présente, les dispositifs d'actionnement de serrure de porte respectivement associés sont activés.

11. Procédé d'obtention d'accès à une automobile au moyen d'un système de fermeture d'automobile comportant au moins un générateur d'identification qu'un utilisateur peut avoir avec lui et qui comprend un émetteur-récepteur et des dispositifs de codage, et plusieurs modules de communication qui sont montés respectivement dans un groupe de portes et qui sont couplés respectivement avec un dispositif d'actionnement de serrure de porte associé, chaque module de communication comprenant un dispositif émetteur et un dispositif récepteur pour la communication sans fil, selon lequel :
a) à partir du dispositif émetteur d'au moins un module de communication, un signal d'activation est rayonné à destination du générateur d'identification lorsque le générateur d'identification se trouve dans une zone spatiale préfixée,
b) le signal d'activation est reçu par l'émetteur-récepteur du générateur d'identification et en conséquence un signal de réponse identifiant est rayonné par l'émetteur-récepteur du générateur d'identification,
c) le signal de réponse est reçu par le dispositif récepteur d'un module de communication, et un signal correspondant au signal de réponse est rayonné au moyen du dispositif émetteur du module de communication, et
d) au moyen du dispositif récepteur d'au moins un autre module de communication, le signal correspondant au signal de réponse est reçu, par suite de quoi, sous l'action d'au moins un autre module de communication, une vérification de l'autorisation d'accès du générateur d'identification est effectuée sur la base du signal correspondant au signal de réponse et, en cas d'autorisation présente, le dispositif d'actionnement de serrure de porte associé est activé.

12. Procédé suivant la revendication 10 ou 11, **caractérisé en ce que**, au cours de l'étape a) , le signal d'activation est rayonné lorsqu'au préalable il a été détecté que le générateur d'identification se trouve dans la zone spatiale préfixée.

13. Procédé suivant la revendication 12, **caractérisé en ce que** la présence du générateur d'identification dans la zone spatiale préfixée est détectée au moyen d'un capteur d'approche qui détecte une approche de l'utilisateur.

14. Procédé suivant l'une des revendications 10-13, **caractérisé en ce que**, au cours des étapes b) et c), après réception du signal d'activation, il est effectué, entre l'émetteur-récepteur du générateur d'identification et le dispositif émetteur ou le dispositif récepteur d'un module de communication, un dialogue préfixé qui comprend d'abord le renvoi d'un premier signal de réponse au signal d'activation provenant du générateur d'identification, à destination du module de communication, ensuite l'émission d'une identification du module de communication ou du véhicule au générateur d'identification, après réception et traitement de cette identification au moyen du générateur d'identification, le renvoi d'une identification du générateur d'identification et finalement l'échange d'une communication cryptée basée sur un nombre aléatoire.

15. Procédé suivant la revendication 14, **caractérisé en ce que** la communication cryptée basée sur un nombre aléatoire comprend une transmission d'un nombre aléatoire par le module de communication au générateur d'identification et ensuite la re-transmission d'un signal crypté basé sur le nombre aléatoire, à destination du module de communication.
